# EUROPEAN PATENT APPLICATION

(11) **EP 4 374 694 A1**
(43) Date of publication of application: **29.05.2024**
(21) Application number: 23210277.2
(22) Date of filing: 16.11.2023
(51) Int. Cl.: A01N 3/00, A01N 37/02, A01P 3/00

(54) **METHODS FOR MANAGING DISEASES IN CUT FLOWERS**

(30) Priority: 23.11.2022 US 202263427636 P
(71) Applicant: Niacet Corporation, Amherst, NY 14228 (US)
(72) Inventor: SCHNABEL, Guido, Clemson, 29631 (US); MUÑOZ, Melissa, Clemson, 29630 (US); FAUST, James, Clemson, 29631 (US); SOJKA, Stanley, Clarence, 14031 (US)
(74) Representative: Freyria Fava, Cristina

(57) **Abstract**

Methods for inhibiting the growth of a microbe on a cut flower using compositions comprising a carboxylic acid of Formula (I) or salt thereof: 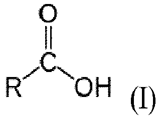 wherein R is H, Ph, Ar, or a C₁-C₆₀ alkyl.

## Description

### FIELD OF THE INVENTION

The present disclosure relates to a method for inhibiting the growth of a microbe on a cut flower by using a carboxylic acid composition.

### BACKGROUND OF THE INVENTION

The control of growth of microbes and the plant diseases they cause is a great concern in a large variety of botanical and agricultural areas, such as, for instance, production and maintenance of ornamental plants, turfgrass, vegetables, grain, and fruit crops. Overcoming microbe growth and disease are important for achieving optimal plant growth, development, and production. The marketing of cut flowers specifically is of considerable economic importance to the horticultural industry. In 2020, for example, the global market for cut flowers was estimated at approximately 30.7 billion and forecasted to grow at a compound annual growth rate of 5.2%. Cut flowers, however, are subjected to considerable stress during harvesting, handling and shipping, and may be attacked by fungal pathogens either during production or during postharvest storage. Their life as well as their appearance, once in the hands of the ultimate consumer, can be considerably reduced as a result.

Disease management is primarily achieved with fungicides but environmental, consumer, and applicator safety are ongoing concerns (Zubrod *et al.,* 2019) (Rani *et al.* 2021) (Goswami *et al*., 2018). These pesticides tend to be toxic chemicals with negative environmental implications, as well as having potentially deleterious effects to the health and well-being of the consumers. As an example, the fungicide chlorothalonil (the active ingredient in many pesticides) is highly toxic to fish, aquatic invertebrates, mollusks, and shrimp and, accordingly, the U.S. Environmental Protection Agency has imposed restrictions on its use in turfgrass and other crops to reduce the risk of disruption to aquatic ecosystems. As another example, certain pesticides have been demonstrated to be "endocrine disruptors," i.e. adversely affecting the endocrine hormonal system of the body, which may in some cases be permanent and may even occur at low doses or long after the exposure. (Vincelli, P., et al., "Chemical Control of Turfgrass Diseases 2017," pp. 1-32, available at http://www2.ca.uky.edu/agcomm/pubs/ppa/ppa1/ppa1.PDF).

Plant damage due to the application of fungicides to plants, known as phytotoxicity, is also a concern. Phytotoxicity appears in several ways on plants, but most commonly as a burn, necrosis, chlorosis, leaf distortion, stunting, or any combination of these symptoms. Phytotoxicity is especially a concern when applying fungicides to plants that are already stressed, such as following cutting. Finally, it is well known concern that microbes eventually develop immunity or resistance to many of the manufactured pesticides.

The USDA conducts regular reregistration assessments to make the use of synthetic fungicides safer (Olson, 2010) (US Environmental Protection Agency (US EPA), 2005). In general, fungicides with a single mode of action are considered reduced-risk by EPA (Fishel, 2010). Reduced-risk fungicides with the same mode of action are categorized into specific FRAC codes to facilitate their implementation in fungicide resistance management strategies. Several studies have been conducted to find alternatives, such as biologicals, botanicals, and other naturally occurring products (Guimaraes *et al*., 2019) (Ranjbar *et al.,* 2022) (Biggs *et al*., 1997) (Zaker, 2014). However, there remains a need for the development of effective and safe alternatives to synthetic fungicides with more favorable risk profiles, and which do not result in microbe immunity or prolong the time to microbe immunity.

### SUMMARY OF THE INVENTION

It is an object of the invention to provide methods of inhibiting growth of a microbe on a cut flower that, at the same time, are environmentally friendly, less toxic, reduce phytotoxicity symptoms, do not result in microbe immunity, prolong the time to microbe immunity, or any combination thereof.

Therefore, disclosed herein are methods of inhibiting growth of a microbe on a cut flower comprising contacting at least a portion of the cut flower with an effective amount of a composition comprising a carboxylic acid of formula (I) or salt thereof: 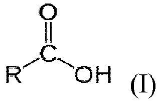 wherein R is H, Ph, Ar, or a C₁-C₆₀ alkyl.

Also disclosed herein are methods of inhibiting growth of a microbe on a cut rose comprising contacting at least a portion of the cut rose with an effective amount of a composition comprising calcium propionate and water, wherein the composition comprises calcium propionate in a concentration of from 0.01% to 0.50% (w/v).

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE DRAWINGS

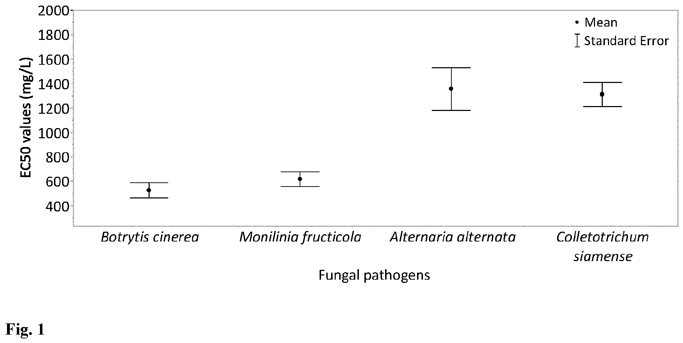

Figure 1 shows mean EC₅₀ values for calcium propionate (CaP) for 6 isolates each of *A. alternata, B. cinerea, C. siamense,* and *M. fructicola.*

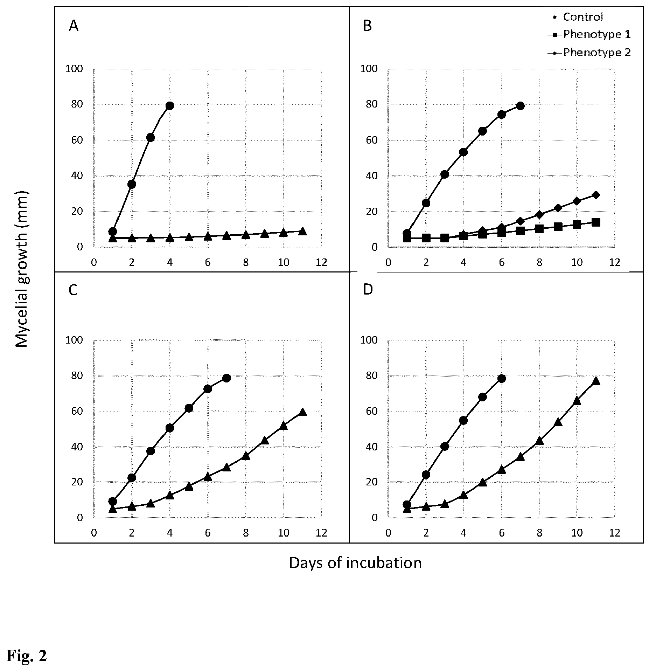

Figure 2A shows mean mycelial growth of 6 isolates of *Botrytis cinerea* on PDA plates amended with 0.8% calcium propionate (CaP; pH 6.0).
Figure 2B shows mean mycelial growth of 6 isolates of *Monilinia fructicola* on PDA plates amended with 0.8% calcium propionate (CaP; pH 6.0).
Figure 2C shows mean mycelial growth of 6 isolates of *Alternaria alternata* on PDA plates amended with 0.8% calcium propionate (CaP; pH 6.0).
Figure 2D shows mean mycelial growth of 6 isolates of *Colletotrichum siamense* on PDA plates amended with 0.8% calcium propionate (CaP; pH 6.0).

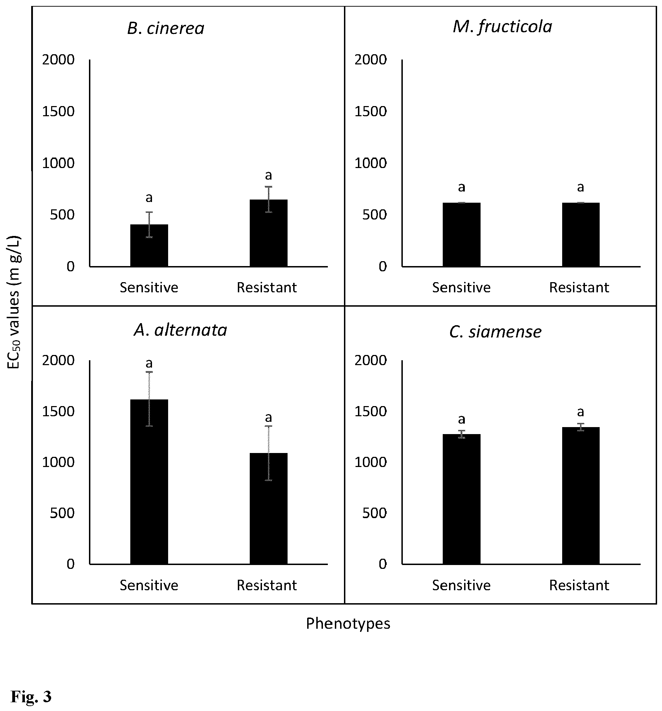

Figure 3 shows efficacy of calcium propionate (CaP; pH 6.0) against isolates of four different fungal genera sensitive and resistant to commonly used FRAC codes: *Colletotrichum siamense* sensitive and resistant to benzimidazoles and quinone outside inhibitors (FRAC 1 and 11), *Alternaria alternata* sensitive and resistant to succinate dehydrogenases (FRAC 7), *Botrytis cinerea* sensitive and resistant to benzimidazoles, dicarboxamides, succinate dehydrogenases, anilinopyrimidines, quinone outside inhibitors, phenylpyrroles, and keto reductase inhibitors (FRAC 1, 2, 7, 9, 11, 12, and 17), and *Monilinia fructicola* sensitive and resistant to demethylation inhibitor fungicides (FRAC 3).

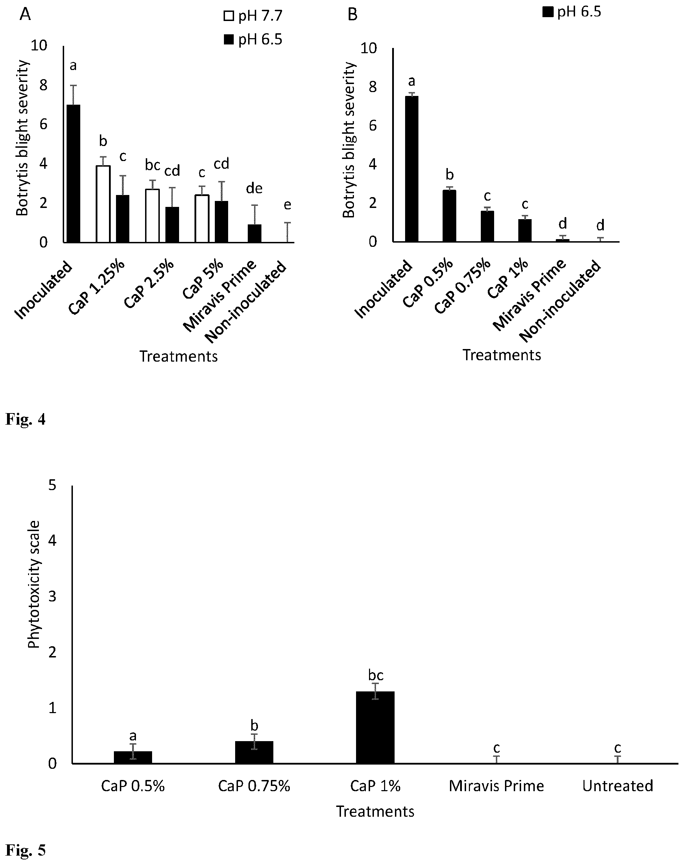

Figure 4A shows the effect of calcium propionate (CaP) spray applications at 0, 1.25%, 2.5%, and 5% (pH 7.7 or 6.5) on botrytis blight of petunia flowers. Mean severity values and analysis are based on two independent biological experiments, each with ten replicates per treatment. The least significant difference test (a = 0.05) was used. Error bars represent +1 SE. Different letters indicate significantly different responses within treatments.
Figure 4B shows the effect of calcium propionate (CaP) spray applications at 0, 0.5%, 0.75%, and 1% (pH 6.5) on botrytis blight of petunia flowers. Mean severity values and analysis are based on two independent biological experiments, each with ten replicates per treatment. The least significant difference test (a = 0.05) was used. Error bars represent +1 SE. Different letters indicate significantly different responses within treatments.
Figure 5 shows phytotoxicity symptom development following calcium propinate (CaP) spray applications at 0.5%, 0.75%, and 1% (pH 6.5) on petunia flowers. Mean severity values and analysis are based on two independent biological experiments, each with ten replicates per treatment. The least significant difference test (a = 0.05) was used. Error bars represent +1 SE. Different letters indicate significantly different responses within treatments.

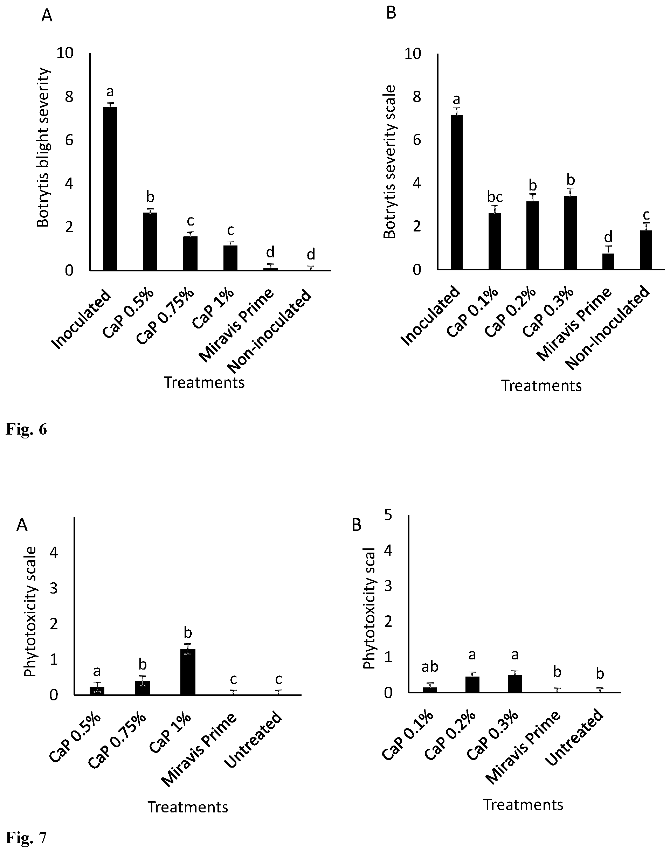

Figure 6A shows the effect of calcium propionate (CaP) spray applications at 0, 0.5%, 0.75%, and 1% (pH 6.5) on botrytis blight of petunia flowers. Mean severity values and analysis are based on two independent biological experiments, each with ten replicates per treatment. The least significant difference test (a = 0.05) was used. Error bars represent +1 SE. Different letters indicate significantly different responses within treatments.
Figure 6B shows the effect of calcium propionate (CaP) spray applications at 0, 0.1%, 0.2%, and 0.3% (pH 6.5) on botrytis blight of petunia flowers. Mean severity values and analysis are based on two independent biological experiments, each with ten replicates per treatment. The least significant difference test (a = 0.05) was used. Error bars represent +1 SE. Different letters indicate significantly different responses within treatments.
Figure 7A shows phytotoxicity symptom development following calcium propionate (CaP) spray applications at 0.5%, 0.75%, and 1% (pH 6.5) on petunia flowers. Mean severity values and analysis are based on two independent biological experiments, each with ten replicates per treatment. The least significant difference test (a = 0.05) was used. Error bars represent +1 SE. Different letters indicate significantly different responses within treatments.
Figure 7B shows phytotoxicity symptom development following calcium propionate (CaP) spray applications at 0.1%, 0.2%, and 0.3% (pH 6.5) on petunia flowers. Mean severity values and analysis are based on two independent biological experiments, each with ten replicates per treatment. The least significant difference test (a = 0.05) was used. Error bars represent +1 SE. Different letters indicate significantly different responses within treatments.

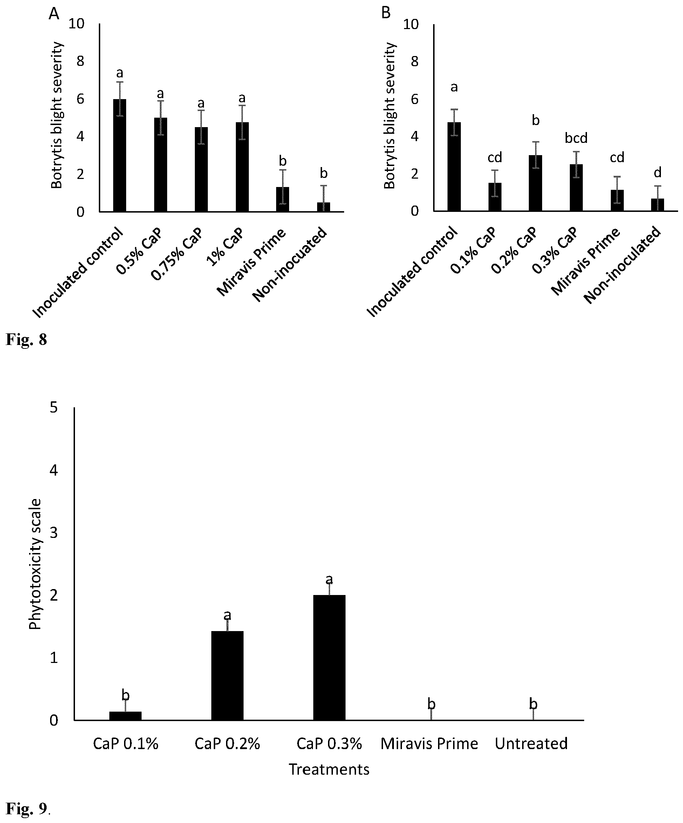

Figure 8A shows the effect of calcium propionate (CaP) spray applications at 0.5%, 0.75%, and 1% (pH 6.0) on botrytis blight of cut rose flowers. The least significant difference test (a = 0.05) was used. Error bars represent +1 SE. Different letters indicate significantly different responses within treatments.
Figure 8B shows the effect of calcium propionate (CaP) spray applications at 0.1%, 0.2%, and 0.3% (pH 6.0) on botrytis blight of cut rose flowers. The least significant difference test (a = 0.05) was used. Error bars represent +1 SE. Different letters indicate significantly different responses within treatments.
Figure 9 shows phytotoxicity symptom development following calcium propionate (CaP) spray applications at 0.1%, 0.2%, and 0.3% (pH 6) on cut flower roses. Mean severity values and analysis are based on two independent biological experiments, each with seven replicates per treatment. The least significant difference test (a = 0.05) was used. Error bars represent +1 SE. Different letters indicate significantly different responses within treatments.

### DETAILED DESCRIPTION OF THE INVENTION

The present invention relates to methods for inhibiting the growth of a microbe on a cut flower using a carboxylic acid composition. In one embodiment, the carboxylic acid composition comprises a carboxylic acid or a salt thereof. The carboxylic acid composition may comprise the carboxylic acid of Formula (I) or salt thereof: 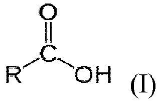 wherein R is H, phenyl (Ph), Ar, or a C₁-C₆₀ alkyl. In one embodiment, the C₁-C₆₀ alkyl is substituted with at least one substituent selected from the group consisting of: F, Cl, Br, I, At, O, S, S(O), SO₂, N, P, P(O), Si, Si(O), B, Al, and combinations thereof. Suitably, Ar is a C₆ or C₁₂ aryl or heteroaryl optionally substituted group where the heteroatom may be O or N and the substituent may be selected from the group consisting of H, F, Cl, Br, I, At, SO₂, NH₂, NHR, NR₂ and combinations thereof, where R is as defined herein. In another embodiment, the C₁-C₆₀ alkyl is substituted with at least one Cl substituent. In another embodiment, the C₁-C₆₀ alkyl is substituted with two Cl substituents.

In one embodiment, R is H or a C₁-C₁₀ alkyl. In another embodiment, R is a C₁-C₈ alkyl. In yet another embodiment, R is a C₃ alkyl.

The term "alkyl" means, unless otherwise stated, a straight or branched chain, acyclic or cyclic hydrocarbon radical, or combination thereof, which may be fully saturated, mono- or polyunsaturated and can include di- and multi-valent radicals, having the number of carbon atoms designated (e.g., C₁₋₁₀ means one to ten carbons) and may be substituted or unsubstituted. Examples of saturated hydrocarbon radicals include groups such as methyl, ethyl, n-propyl, isopropyl, n-butyl, t-butyl, isobutyl, sec-butyl, cyclohexyl, (cyclohexyl)methyl, cyclopropylmethyl, homologs and isomers of, for example, n-pentyl, n-hexyl, n-heptyl, n-octyl, and the like. An unsaturated alkyl group is one having one or more double bonds or triple bonds. Examples of unsaturated alkyl groups include vinyl, 2-propenyl, crotyl, 2-isopentenyl, 2-(butadienyl), 2,4-pentadienyl, 3-(1,4-pentadienyl), ethynyl, 1- and 3-propynyl, 3-butynyl, and the higher homologs and isomers.

In one embodiment, the carboxylic acid is propionic acid and has the following formula (II):

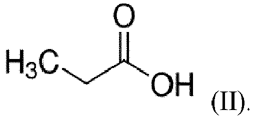

The carboxylic acid useful in the disclosed compositions may be formulated with any agriculturally acceptable salt. Examples of salts include, for example, metal salts such as sodium, potassium, calcium and magnesium salts, ammonium salts such as isopropylammonium salts, and trialkylsulfonium salts such as trimethylsulfonium salts.

Carboxylic acid salts may comprise a carboxylic acid neutralized with, for example, a cation such as Ca⁺², Ba⁺², La⁺³, Cd⁺², Pb⁺², Co⁺², Mn⁺², Ce⁺⁴, Mg⁺², Zn⁺², Cu⁺², Fe⁺³, Fe⁺², Ni⁺², Sr⁺², La⁺³, Li⁺¹, Na⁺¹, K⁺¹, Rb⁺¹, Cs⁺¹, Fr⁺¹, Be⁺², Ra⁺², Al⁺³, NH₄⁺, NH₃R⁺, NH₂R₂⁺, NHR₃⁺, NR₄⁺, where R is as herein defined, and the like. Exemplary salts may be salts of alkali metals, alkaline earth metals and or ammonium salts. Alkali metal ions include Li⁺¹, Na⁺¹, K⁺¹, Rb⁺¹, Cs⁺¹, and Fr⁺¹. Alkaline earth metal ions include Be⁺², Mg⁺², Ca⁺², Sr⁺, Ba⁺², and Ra⁺². Ammonium salts include primary, secondary, tertiary and quaternary ammonium salts, such as NH₄⁺, NH₃R⁺, NH₂R₂⁺, NHR₃⁺, NR₄⁺, where R is as herein defined.

In one embodiment, the carboxylic acid composition comprises a calcium salt of the carboxylic acid. In another embodiment, the carboxylic acid composition comprises calcium propionate. In yet another embodiment, the carboxylic acid composition comprises propionic acid or a salt thereof.

The carboxylic acid composition may consist essentially of a carboxylic acid of Formula (I) or salt thereof, such as calcium propionate. "Consists essentially of' means that the carboxylic acid or salt thereof is the only active ingredient in the composition, e.g., the only ingredient that inhibits microbial growth, while other inactive ingredients may be present as, for instance, vehicles or mediums for administration or stabilization such as water and/or a pH-adjusting agent.

The carboxylic acid composition may also comprise at least one agriculturally suitable carrier. The at least one agriculturally suitable carrier may be a liquid, a solid, a surfactant, or combinations thereof. Examples of solid carriers are described in Watkins, et al., Handbook of Insecticide Dust Diluents and Carriers, 2nd Ed., Dorland Books, Caldwell, N.J. Examples of liquid carriers are described in Marsden, Solvents Guide, 2nd Ed., Interscience, New York, 1950. McCutcheon's Detergents and Emulsifiers Annual, Allured Publ. Corp., Ridgewood, N.J., as well as Sisely and Wood, Encyclopedia of Surface Active Agents, Chemical Publ. Co., Inc., New York, 1964, list surfactants and recommended uses. The carboxylic acid composition may also contain additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, N,N-dialkyltaurates, lignin sulfonates, naphthalene sulfonate formaldehyde condensates, polycarboxylates, and polyoxyethylene/ polyoxypropylene block copolymers.

Solid carriers include, for example, ground corn cobs, clays such as bentonite, montmorillonite, attapulgite and kaolin, starch, sugar, silica, talc, diatomaceous earth, urea, calcium carbonate, sodium carbonate, sodium bicarbonate, and sodium sulfate.

Liquid carriers include, for example, water, N,N-dimethylformamide, dimethyl sulfoxide, N-alkylpyrrollidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-methyl-2-pentanone, and alcohols such as methanol, cyclohexanol, decanol and tetrahydrofurfuryl alcohol.

The formulation of the carboxylic acid composition can be selected to be consistent with the physical properties of the carboxylic acid, mode of application, and environmental factors such as soil type, moisture and temperature. Useful formulations include liquids such as solutions (including emulsifiable concentrates), suspensions, emulsions (including microemulsions and/or suspo-emulsions) and the like which optionally can be thickened into gels.

Useful formulations further include solids such as dusts, powders, granules, pellets, tablets, films, and the like which can be water-dispersible ("wettable") or water-soluble. The carboxylic acid composition can be microencapsulated calcium propionate and further formed into a suspension or solid formulation; alternatively the entire formulation can be encapsulated calcium propionate (or "overcoated"). Encapsulated calcium propionate solution can control or delay release of the active ingredient. Sprayable formulations can be extended in suitable media and used at spray volumes from about one to several hundred liters per hectare. High-strength formulations are primarily used as intermediates for further formulation.

In one embodiment, the carboxylic acid composition is in a liquid formulation. In another embodiment, the carboxylic acid composition comprises water as a carrier. The carboxylic acid and/or salt thereof may be present in the liquid formulation or water at a concentration range of from 0.01% to 1.00% (w/v), from 0.01% to 0.50% (w/v), from 0.05% to 0.75% (w/v), or from .05% to .15% (w/v). In one embodiment, the concentration of the carboxylic acid and/or salt is about .01%, .05%, .06%, .07%, .08%, .09%, .10%, .11%, .12%, .13%, .14%, .15%, .20%, .25%, .30%, .35%, .40%, .45%, or .50% (w/v).

Suitably, the carboxylic acid composition in an aqueous formulation has a pH in the range of from 5.0 to 7.0. In one embodiment, the pH of the aqueous formulation is from 5.5 to 6.5. In yet another embodiment, the pH of the aqueous formulation is acidic. In still other embodiments, the aqueous formulation may have a pH of about 5.5, 5.6, 5.7, 5.8, 5.9, 6.0, 6.1, 6.2, 6.3, 6.4 or 6.5. The pH of the aqueous formulation may be adjusted in the desired range by use of a pH adjusting agent. The pH adjusting agent that may be used includes, but is not limited to, sodium hydroxide, hydrochloric acid, sulfuric acid, citric acid, acetic acid, tromethamine, potassium hydroxide, and mixtures thereof. It may not be necessary to add a pH adjusting agent to obtain the desired pH of the aqueous formulation. Accordingly, in one embodiment, the aqueous formulation is substantially free of pH adjusting agents.

The disclosed carboxylic acid compositions can also be mixed with one or more fertilizers, pesticides, safeners, insecticides, fungicides, nematocides, bactericides, acaricides, growth regulators, chemosterilants, semiochemicals, repellents, attractants, pheromones, feeding stimulants or other biologically active compounds. Examples of such agricultural protectants with which the carboxylic acid compositions can be formulated are: insecticides such as abamectin, acephate, azinphos-methyl, bifenthrin, buprofezin, carbofuran, chlorfenapyr, chlorpyrifos, chlorpyrifos-methyl, cyfluthrin, beta-cyfluthrin, cyhalothrin, lambda-cyhalothrin, deltamethrin, diafenthiuron, diazinon, diflubenzuron, dimethoate, esfenvalerate, fenoxycarb, fenpropathrin, fenvalerate, fipronil, flucythrinate, tau fluvalinate, fonophos, imidacloprid, isofenphos, malathion, metaldehyde, methamidophos, methidathion, methomyl, methoprene, methoxychlor, methyl 7-chloro-2,5-dihydro-2-[[N-(methoxycarbonyl)-N-[4-(trifluoromethoxy)phenyl] amino]carbonyl]indeno[1,2-e][1,3,4]oxadiazine-4a(3H)-carboxylate (DPX-JW062), monocrotophos, oxamyl, parathion, parathion-methyl, permethrin, phorate, phosalone, phosmet, phosphamidon, pirimicarb, profenofos, rotenone, sulprofos, tebufenozide, tefluthrin, terbufos, tetrachlorvinphos, thiodicarb, tralomethrin, trichlorfon and triflumuron; fungicides such as azoxystrobin, benomyl, blasticidin-S, Bordeaux mixture (tribasic copper sulfate), bromuconazole, calcium propionatetafol, calcium propionatetan, carbendazim, chloroneb, chlorothalonil, copper oxychloride, copper salts, cymoxanil, cyproconazole, cyprodinil (CGA 219417), diclomezine, dicloran, difenoconazole, dimethomorph, diniconazole, diniconazole-M, dodine, edifenphos, epoxiconazole (BAS480F), famoxadone, fenarimol, fenbuconazole, fenpiclonil, fenpropidin, fenpropimorph, fluazinam, fluguinconazole, flusilazole, flutolanil, flutriafol, folpet, fosetyl-aluminum, furalaxyl, hexaconazole, ipconazole, iprobenfos, iprodione, isoprothiolane, kasugamycin, kresoxim-methyl, mancozeb, maneb, mepronil, metalaxyl, metconazole, S-methyl 7-benzothiazolecarbothioate (CGA 245704), myclobutanil, neo-asozin (ferric methanearsonate), oxadixyl, penconazole, pencycuron, probenazole, prochloraz, propiconazole, pyrifenox, pyroquilon, quinoxyfen, spiroxamine (KWG4168), sulfur, tebuconazole, tetraconazole, thiabendazole, thiophanate-methyl, thiram, triadimefon, triadimenol, tricyclazole, triticonazole, validamycin and vinclozolin; nematocides such as aldoxycarb and fenamiphos; bactericides such as streptomycin; acaricides such as amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben and tebufenpyrad; and biological agents.

. Synthetic fungicides with single-site mode of action are vulnerable to resistance development and are subject to resistance management protocols to extend their life span. Accordingly, in certain instances, combinations with fungicides having a similar spectrum of control but a different mode of action will be particularly advantageous for inhibition of microbial growth.

The carboxylic acid compositions may be used in the customary manner, for example, by watering, spraying, atomizing, scattering, brushing on and as a powder, a water-soluble powder for slurry treatment, encapsulation, or by encrusting. In one embodiment, the carboxylic acid compositions are contacted with at least a portion of a cut flower by spraying. In another embodiment, the carboxylic acid compositions are contacted with at least a portion of a cut flower by submerging the cut flower in the carboxylic acid composition.

The disclosed methods are useful for inhibiting the growth of a microbe. The term "inhibiting" microbial growth, or a material which "inhibits" microbial growth, is used to mean materials which either prevent microbial growth, or subsequently kills microbes so that the population is within acceptable limits, or materials which significantly retard the growth processes of microbes or maintain the level or microbes to a prescribed level or range. The prescribed level may vary widely depending upon the microbe and its pathogenicity; generally it is preferred that harmful organisms are present at a level such that any disease or diseases caused by the microbe cannot be visually detected with 20/20 vision at a distance of one meter or more from the cut flower. In one embodiment, microbes cannot be detected or remain at a level which is not harmful to the cut flower.

In one embodiment, the microbe is a fungus or a bacterium. The carboxylic acid compositions disclosed herein may be used to inhibit the growth of a fungus belonging to the following classes: Ascomycetes (e.g. *Venturia, Podosphaera, Erysiphe, Monilinia, Mycosphaerella, Uncinula);* Basidiomycetes (e.g. the genus *Hemileia, Rhizoctonia, Phakopsora, Puccinia, Ustilago, Tilletia*); Fungi imperfecti (also known as Deuteromycetes; e.g. *Botrytis, Helminthosporium, Rhynchosporium, Fusarium, Septoria, Cercospora, Alternaria, Pyricularia* and *Pseudocercosporella);* Oomycetes (e.g. *Phytophthora, Peronospora, Pseudoperonospora, Albugo, Bremia, Pythium, Pseudosclerospora,* and *Plasmopara).*

In another embodiment, the microbe is *Alternaria alternata*, *Botrytis cinerea, Colletotrichum siamense, Monilinia fructicola, Sclerotinia homoeocarpa, Rhizoctonia solani, Magnaporthe poae, Gaeumannomyces graminis, Puccinnia striiformis*, or a combination thereof.

Specific examples of diseases caused by the microbe include gray snow mold *(Typhula spp.),* pink snow mold *(Microdochium nivale),* leaf spot *(Drechslera* and *Bipolaris spp.),* red thread (*Laetisaria fuciformis*), dollar spot *(Sclerotinia homoeocarpa),* brown patch *(Rhizoctonia solani),* large patch *(Rhizoctonia solani),* pink patch *(Limonomyces roseipellis)* gray leaf spot *(Pyricularia grisea),* anthracnose *(Colletotrichum cereale),* phythium blight *(Pythium spp.),* red leaf spot *(Dreschslera erythrospila),* brown ring patch (*Waitea circinata)* powdery mildew *(Blumeria graminis),* slime mold (e.g., *Physarum cinereum),* summer patch *(Magnaporthe poae)* take-all patch *(Gaeumannomyces graminis),* necrotic ring spot *(Ophiosphaerella* spp.), yellow patch *(Rhizoctonia cerealis*), melting out *(Drechslera* and *Bipolaris* spp.), smut diseases *(Ustilago* spp.), and rust diseases *(Puccinnia* spp.), such as stem rust *(Puccinnia striiformis*).

As used herein, "cut" applies to a flower that is separated from its parent plant and, as such, is no longer actively growing but is proceeding to completion of its lifecycle, i.e., is "non-living", whereas "living" or "live" applies to a plant that has physical life, i.e., a live plant is one which is actively growing (or is capable or actively growing) compared to cut plant material and which, for instance, still has functional roots. Merely by way of example, turfgrass that is cut, e.g. by a mower, and is thereby separated from the root is "cut" or "non-living," while the portions of the turfgrass remaining growing in the growing medium, e.g. soil, is "live" or "living." Similarly, plants that have been "cut" for, e.g. consumption, such as alfalfa, hay, peanuts, wheat, corn, grain and the like, or decoration, such as roses, petunias, flowers and the like are "non-living". It should be noted that cut flowers may appear to continue growing somewhat, for instance when placed in a vase, as evidenced by secondary bud expansion etc., however the resulting cell elongation and explanation of meristematic tissue signifies an inevitable depletion and redistribution of cellular resources as the cutting attempts to complete its lifecycle. This is evidenced by yellowing leaves, stems or shoot tips stretching, a loss of color in petals and/or bending flower and bud pedicels and, consequently, the cut flower is no longer "live" or "living."

Cut flowers may be ornamental, such as herbaceous or woody ornamental flowers. Cut flowers may include annuals or perennials, such as, for instance, roses or petunias. Examples of annuals include, but are not limited to, Ageratum (Floss Flower), Alyssum, Amaranthus caudatus (Love Lies Bleeding), Amaranthus hybrids, Ammi majus (Bishop's Flower, False Queen Anne's Lace, White Dill), Anemone (Anemone sylvestris), Angelonia, Bacopa, Begonia, Bells of Ireland (Moluccella laevis), Blue Lace Flower (Trachymene coerulea), Calendula (Calendula officinalis), Callistephus chinesis (China Aster), Canna, Castor Bean (Ricinus communis), Celosia, cristata (Cockscomb), Celosia, plumosa (Feather), Celosia, spicata (Wheat), Centaurea (Bachelors' Button), Cleome (Spider Flower), Cosmos (Cosmos bipinnatus), Dianthus, Dill, Drumstick Flower (Craspedia globosa), Euphorbia, Forget-Me-Not (Myosotis sylvatica), Gazania, Geranium, Gerbera, Gomphrena (Globe Amaranth), Gypsophilia, Helichrysum (Strawflower), Heliotrope, Impatiens, Kiss Me Over the Garden Gate (Polygonum orientale), Larkspur (Consolida ambigua), Lisianthus (Eustoma grandiflorum), Lobelia, Marigold (Tagetes erecta), Melampodium, Nasturtium, Nicotiana, Nigella damascena (Love In A Mist), Osteospermum, Pansy, Pentas, Petunias, Phlox, Portulaca, Ptilotus, Reseda Odorata (Mignonette), Rudbeckia, Salpiglossis (Painted Tongue), Salvia, Schizanthus, Snapdragon, Statice (Limonium sinuatum), Strawflower (Bracteantha bracteata), Stock (Matthiola), Sunflower, Sweet Annie (Artemisia annua), Sweet Pea Old fashioned, Torenia, Verbena, Vinca, Viola, and Zinnia.

Examples of perennials include, but are not limited to, Achillea, Alstroemeria, Alcea, Alchemilla, Allium, Amsonia, Aquilegia, Asclepias, Aster, Astilbe, Baptisia, Begonia, Bergenia, Bird of Paradise, Buttercup, Camellia, Campanula, Carnations, Centaurea, Chinese lantern, Chrysanthemum (Shasta Daisy & others), Columbine, Coneflower, Convallaria, Coreopsis (tickseed), Corydalis, Crambe, Crocus, Cyclamen, Daffodil, Dahlia, Daisies, Delphinium, Dianthus, Dicentra, Digitalis (foxglove), Doronicum, Echinacea, Echinops, Eryngium, Freesia, Gaillardia, Gardenia, Geraniums, Gerberas, Gladiolus, Gypsophila, Heather, Helleborus, Helenium, Heuchera, Hibiscus, Hosta, Hydrangeas, Hyssopus, Hyacinth, Iris, Knautia, Kniphofia, Lavender, Leucanthemum, Lilies, Lobelia, Lupine, Lysimachia, Macleaya, Monarda, Muscari, Narcissus, Nicotiana, Orchids, Paeonia, Papaver, Shirley & Iceland, Penstemon, Perovskia, Petunias, Peonies, Perovskia, Phlox, Physostegia, Platycodon, Polemonium, Porteranthus, Primula, Roses, Rudbeckia, Salvia, Scabiosa, Sedum, Sidalcea, Snapdragon, Stokesia, Thermopsis, Thalictrum, Tricyrtis, Trollius, Tulips, Verbascum, Verbena, Veronica, and Violet.

One or more portions of a cut flower may be contacted by the carboxylic acid compositions, such as leaves, leaflets, stems, foliage, pistil, petal, stamen, receptacle, flower head, and sepal. In one embodiment, the carboxylic acid composition is contacted with at least one portion of the petal of the flower. In another embodiment, the carboxylic acid composition is contacted with at least one portion of the stem of the flower. A cut flower, or a portion thereof, may be contacted by the carboxylic acid compositions at any stage of development, for example, immature or mature.

The carboxylic acid compositions may be applied to a cut flower via stem conduction, spray, drench, or other means of wetting. In one embodiment, the carboxylic acid compositions can be applied as sprays by methods commonly employed, such as conventional high-gallonage hydraulic sprays, low-gallonage sprays, air-blast, aerial sprays and dusts. The carboxylic acid compositions may be applied to the point of run-off, i.e., to the point at which a given surface will no longer hold liquids on its surface and the liquid will run off.

The carboxylic acid compositions may also be applied by submerging the cut flower, or a portion thereof, into the carboxylic acid composition. The cut flower may be submerged from one second to ten minutes, from one second to one minute, or from one to thirty seconds. In one embodiment, the flower head is submerged into the carboxylic acid composition. In another embodiment, the stem is submerged into the carboxylic acid composition.

Any application schedule may be followed as long as optimal inhibition of microbe growth and/or disease is obtained. Application may occur less frequently as the time from cutting increases. A single application of the carboxylic acid composition to at least a portion of the cut flower may be sufficient. The carboxylic acid composition may be applied, for instance, immediately, up to 24 hours, or up to one week after a flower is cut. In other embodiments, the carboxylic acid composition may be applied more than once. For instance, the carboxylic acid composition may be applied up to ten times to at least a portion of a cut flower or from one to seven times per week to at least a portion of the cut flower. Application may occur less frequently as the time from being cut increases.

### EXAMPLES

The following examples are not meant to be limiting and represent certain embodiments of the present invention.

### Example 1

A total of 26 fungal isolates with varying phenotypes to commonly used fungicide groups were used for this study (Table 1).

| Table 1. Fungal pathogens and their characteristics | | | | |
|---|---|---|---|---|
| Fungal pathogen | Isolates | Phenotype | Host | Reference |
| *Alternaria alternata* | AaSE12-17, AaRR13-5, AaEY12-1 | Sensitive to FRAC 7 | Peach | Yang *et al.* 2015 |
| | AaRR13-28, AaRR13-35, AaSE12-6 | Resistant to FRAC 7 | | Yang *et al.* 2015 |
| *Botrytis cinerea* | NC4, HP9, FLOR5 | Sensitive to FRAC 1,2,7,9, 11,12,17 | Strawberr y | Fernández-Ortuño *et al.* 2014 |
| | Jey2013.2, Jley2, CT1 | Resistant to FRAC 1,2,7,9, 11,12,17 | | Fernández-Ortuño *et al.* 2014 |
| *Botrytis cinerea* | S4GBR4O | Resistant to FRAC 1,2,7,9 | Rose | Muñoz *et al*., 2019 |
| | PDRK3 | - | Petunia | Bennett 2019 |
| *Colletotrichu m siamense* | EY12-2, EY12-6, EY12-8 | Sensitive to FRAC 1, 11 | Peach | Hu *et al.* 2015 |
| | OD13-5, OD13-7, OD13-9 | Resistant to FRAC 1,11 | | Hu *et al.* 2015 |
| *Monilinia fructicola* | SC99A4.04, Kac18, GADL3 | Sensitive to FRAC 3 | Peach | Luo *et al.* 2008 |
| | Bmpc7, Bmpc13, GADL193 | Resistant to FRAC 3 | | Luo *et al.* 2008 |

They included *Alternaria alternata* isolates sensitive and resistant to FRAC 7 (Yang *et al*., 2015), *Botrytis cinerea* isolates sensitive and resistant to FRAC 1, 2, 7, 9, 11, 12, and 17 (Fernández-Ortuño *et al*., 2015), *Colletotrichum siamense* isolates sensitive or resistant to FRAC 1 and 11 (Hu *et al.,* 2015), *and Monilinia fructicola* isolates sensitive and resistant to FRAC 3 (Luo and Schnabel, 2008) (Table 1). The isolates were recovered from dried fungal mycelium filter papers stored at 4°C. The cultures were maintained at 25°C in dark for determination of mycelium growth inhibition studies. Spore suspensions of *B. cinerea* isolates (Table 1) (Bennett, 2019) (Muñoz *et al*., 2019) for petunia and cut rose studies, respectively, were prepared by growing the isolates at 25°C in 12 h photoperiod.

### Chemicals and fungicides

Different concentrations of calcium propionate (CaP; Niacet Corporation, Niagara Falls, NY). were prepared from a 10% stock solution to prepare working solutions. A combination of Pydiflumethophen + Fludioxonil (sold under the trademark MIRAVIS^{™} PRIME; Syngenta, Raleigh, NC) was included as a control treatment in the flower study evaluation.

### Petunia flowers and cut roses

Petunia×hybrida `Dreams burgundy picotee' plugs obtained in 2021 from Ball Horticultural company were used in this study. The plugs were transplanted in 1.4 L containers containing a peat-based growing medium. The plants were grown in a glass greenhouse at Clemson University, SC, USA with the environment controlled by a climate-control computer (Argus Control Environmental Systems, White Rock, BC, Canada). Petunia plants were watered with a fertilizer solution of 15-5-15 at 250 mg/L of nitrogen. The plants were pruned to allow new growth and flowers. All open petunia flowers were removed the day before the start of an experiment to allow harvesting open flowers of the same age for experiments.

Commercial roses from the cultivar Orange Crush were obtained from a wholesaler. All roses originated from the same farm and grower either from Colombia or Ecuador. After receiving the roses, they were placed for 24h in a cold room at 5°C (Climate Technologies Inc., Laytonsville, MD), then the roses were randomized into sets of seven flowers per treatment, and the tip of the stem was cut to allow for better rehydration. All the roses were left with a height of 30 cm.

### In-vitro effect of CaP on fungal mycelium growth

A 10% buffered (pH 6.0) stock solution in autoclaved de-ionized water was used to prepare working calcium propionate solutions. Initially, five concentrations of 0, 1, 5, 25, and 100 ppm were screened for determining the effect of calcium propionate on fungal mycelia. Higher concentrations of 300, 900, 2700, and 8100 ppm were also tested in mycelium growth inhibition assays to determine EC₅₀ values for isolates sensitive and resistant to FRAC codes 1, 2, 7, 9, 11, 12, 13, and 17 (i.e., benzimidazoles, quinone outside inhibitors, dicarboxamides, succinate dehydrogenases, phenylpyrroles, demethylation inhibitor fungicides, and anilinopyrimidines respectively).

To prepare different concentrations, calculated amount of stock solution was mixed in autoclaved (121 C for 20 mins) potato dextrose agar (PDA) after the media cooled down to appropriate temperature. Amended media with different CaP concentrations was poured in to 15 × 100 mm petri dishes (VWR International, LLC., Radnor, PA), and left to solidify. For mycelium growth, 5 mm plugs were obtained from the edges of freshly grown seven-day old cultures from all 24 isolates of different fungal genera including *Alternaria* sp., *Botrytis* sp., *Colletotrichum* sp., and *Monilinia* sp. (Table 1). Two culture plugs of each isolate were placed near opposite edges of individual CaP amended PDA media plates. The media plates with no CaP (0 ppm) served as control treatment. Inoculated plates were then incubated at 25⁰C in dark for 7-10 days. Mycelium growth diameter was measured using a vernier caliper just before the mycelium growth of two colonies in the control media plate overlapped. Each isolate was replicated six times and the entire experiment was conducted twice. Mycelium inhibition rates were calculated and EC50 values were determined. Additionally, the fungistatic activity of calcium propionate was determined at 8000 mg/L (0.8%; pH 6.0) concentration, buffered at pH 6 with acetic acid. The concentration was prepared by amending an appropriate amount of stock solution to an autoclaved PDA media solution cooled down to 60⁰C. Amended media was poured into media plates and the media was allowed to solidify. Unamended PDA media plates were used as control treatment. For inoculation of CaP amended media plates, 5 mm fungal culture plugs were obtained from 7-10-day old cultures for all 24 isolates except for the two *B. cinerea* isolates from roses and petunias (Table 1). The inoculated plates were stored at 25⁰C in the dark. Mycelium growth was recorded every 24 h using a vernier caliper until fungal mycelia in control treatments reached the 90 mm in diameter petri dish rim.

### Effect of CaP on petunia flowers and cut roses

Calcium propionate concentrations were prepared by adding appropriate amounts in de-ionized water and tested in four separate experiments. Spray applications at 1.25%, 2.5%, and 5% (pH 7.7 and buffered with acetic acid to pH 6.5) (first experiment) and 0.5%, 0.75%, and 1% buffered with acetic acid to pH 6.5 (second experiment) were made on harvested open petunia flowers. Separately, spray applications at 0.1%, 0.2%, 0.3%, (third experiment) 0.5%, 0.75%, and 1% (fourth experiment) buffered with acetic acid to pH 6.5 were made on harvested open petunia flowers. Approximately 24 hours after spray applications, the flowers were arranged in humid chambers maintaining relative humidity of 98-100% and inoculated by spraying spore suspension (10⁴ spores/ml) of *B. cinerea* isolate PDRK3 (Bennett et al. 2019). Fungicide applications and spore suspensions were misted onto flowers until runoff to completely cover the flower using a 4 oz clear PET plastic bullet bottle with white mist sprayer (The Cary Company, Addison, IL). The petunia flowers were evaluated 72 h after inoculation to observe botrytis blight severity and phytotoxicity using ratings from 0 to 8 scale based on the area of infected corolla (0 = no infection; 8 = complete necrosis), modified from Bennett (2019). Pydiflumethophen + fludioxonil (sold under the trademark MIRAVIS^{™} PRIME; Syngenta, Raleigh, NC) was used as a commercial fungicide control along with a non-inoculated and an inoculated control. Ten flowers were evaluated per treatment and the entire experiment was repeated twice.

Calcium propionate concentrations of 0.1%, 0.2%, 0.3%, 0.5%, 0.75%, 1% (pH 6.0), were prepared and tested against Botrytis blight on cut roses. Treatments were applied by submerging flower-head of 15 sec in the solutions of the treatments and gently moving the flowers up and down to allow the petals to open and help the product get in touch with the most internal petals. Then, the flowers were placed vertically in open PVC boxes over heavy-duty thermoformed trays (Greenhouse Megastore, Danville, IL) containing 3L of water. The boxes and trays were placed inside open humid chambers for 24h, then the flowers were sprayed with a *Botrytis cinerea* spore suspension at 10⁵ spores/ml from the previously characterized isolate S4GBR4O (Muñoz *et al*., 2019). The humid chambers were closed, and data collection of disease severity was taken 3, 5, and 7 days after the inoculation. Relative humidity in the humid chambers was maintained in a range of 97-100% which was verified using a psychrometer (RH300, Extech Instruments, Nashua, NH, US). Observational data on phytotoxicity symptoms were also collected. Additionally, an inoculated control, Pydiflumethophen + Fludioxonil (sold under the trademark MIRAVIS^{™} PRIME; Syngenta, Raleigh, NC), and a non-inoculated treatment were included in the evaluation. The experiment with CaP treatments of 0.5%, 0.75%, and 1% (pH 6.0) were conducted only once due to phytotoxicity issues. All lower dose treatments were performed twice.

### Data analysis

Statistical analysis was carried out using JMP Pro version 16.0.0 (SAS Institute Inc., Cary, NC), and p-values less than 0.05 were considered evidence of statistical significance. Analysis of variance (ANOVA) and the Fisher least significant difference (LSD) Student t-test was used to determine treatment effects and compare means between treatments at P < 0.05, respectively.

### In-vitro fungal mycelium growth inhibition to determine EC₅₀ values

Preliminary experiments revealed CaP concentrations of 1, 5, 25, and 100 mg/L were unable to inhibit fungal mycelium growth effectively. The maximum inhibition observed at these concentrations remained below 20%. Consequently, higher concentrations of 300, 900, 2700, and 8100 ppm were tested. The mean EC₅₀ values for six each of *B. cinerea, M. fructicola, A. alternata,* and *C*. *siamense* isolates was 527.77, 618.25, 1354.87, and 1310.34 mg/L (Fig. 1). At 8000 ppm (0.8%; pH 6.0), maximum inhibition activity was observed nearing 100% mycelium growth inhibition for all four pathogens after 2-4 days of incubation, however, there was a significant difference in the growth rate after that time depending on the species tested (Fig. 2). *C. siamense* and *A. alternata* mycelium recovered quickly and growth rate was reaching that of the untreated control (Fig. 2).

The in-vitro sensitivity studies were conducted using fungal isolates that showed phenotypic variation in sensitivity to commonly used fungicide groups (Table 1). The mean EC₅₀ values for CaP obtained for isolates sensitive and obtained for isolates resistant to many commonly used chemical groups of fungicides were not significantly different (Fig. 3).

### Effect of CaP on botrytis blight of cut flowers

Botrytis blight severity was very high in inoculated petunia flowers reaching 8 on the scale in both the first and second experiments (Fig. 4A and B). In both experiments the synthetic fungicide standard effectively controlled the disease. CaP concentrations 1.25%, 2.5%, and 5% (pH 6.5 and 7.7) reduced botrytis blight compared to the inoculated control (Fig. 4A), and the lower pH treatments provided significantly better control in the 1.25% CaP treatment compared to the higher pH treatment at the same concentration. However, the increase in concentration from 1.25% to 5% did not correspond to an increase in control efficacy (Fig. 4A). Evidence of phytotoxicity was observed at 1.25%, 2.5%, and 5% CaP (pH 6.5 and 7.7) in form of bleaching of petunia flower tissue (data not shown). In experiment two, all CaP treatments reduced disease severity (Fig. 4B). The 0.75% and 1.0% CaP (pH 6.5) treatments provided significantly better control compared to the 0.5% (pH 6.5) treatment (Fig. 4B), but noticeable phytotoxicity occurred at 0.75% and 1% (pH 6.5). In contrast, phytotoxicity was barely noticeable at 0.5% (Fig. 5).

Botrytis blight severity was very high in inoculated petunia flowers reaching almost 8 on the scale in both third and fourth experiments (Fig. 6A and B). In both experiments, the synthetic fungicide standard effectively controlled the disease. All CaP concentrations at pH 6.5 reduced botrytis blight compared to the inoculated control (Fig. 6A and 6B). However, the increase in concentration from 0.75% to 1% (fourth experiment) and 0.1% to 0.3% (third experiment) did not correspond to an increase in control efficacy (Fig. 6A and 6B). Evidence of phytotoxicity was observed at 0.5%, 0.75%, and 1% CaP (pH 6.5) in form of bleaching of petunia flower tissue which increased with increasing concentrations (Fig. 7A). In experiment three, all CaP treatments reduced disease severity (Fig. 6B) and very little to no phytotoxicity was noticed at lower concentrations (pH 6.5). Phytotoxicity at 0.1% was barely noticeable and no significant difference was observed between 0.1% CaP and untreated control treatments (Fig. 7B).

Botrytis blight severity in cut flower rose experiments was highest in the first experiment (Fig. 8A; 6 on the severity scale) and moderate (4.5 on the severity scale) in the second experiment (Fig. 8B). In both experiments the synthetic fungicide standard significantly reduced disease severity. No statistical differences were observed in cut roses between the 0.5%, 0.75%, and 1% CaP (pH 6.0) treatments and the inoculated control (Fig. 8A). At concentrations of 0.5% CaP (pH 6.0) and higher, phytotoxicity symptoms were observed and appeared as localized rounded areas primarily in the outermost petals and in form of discolored edges (data not shown). Phytotoxicity symptoms were distinguishable from Botrytis blight symptoms because the latter were necrotic in appearance with lesions developing beige to light brown spots that eventually revealed spore masses, while the phytotoxicity symptoms were white in color and resembled bleach stains (data not shown). Examination of lower concentrations (Fig. 8B) showed significantly higher efficacy of 0.1% compared to 0.3% CaP (pH 6.0). In fact, the 0.1% (pH 6.0) CaP treatment was as effective as the grower standard Miravis Prime (Fig. 8B). While treatments 0.3% and 0.2% CaP (pH 6.0) still showed minor symptoms of phytotoxicity in form of spots 1-2 mm in size, no to barely noticeable phytotoxicity was observed in the 0.1% CaP (pH 6.0) treatment (Fig. 9).

### REFERENCES

Backhouse, D. and Willetts, H. J. (1987). Development and structure of infection cushions of Botrytis cinerea. Transactions of the British Mycological Society 891
Bennett, K. (2019). The effect of calcium on Botrytis blight of petunia flowers
Biggs, A. R., El-Kholi, M. M., El-Neshawy, S., and Nickerson, R. (1997). Effects of calcium salts on growth, polygalacturonase activity, and infection of peach fruit by Monilinia fructicola. Plant Dis. 814
Biggs, A. R. (1999). Effects of calcium salts on apple bitter rot caused by two Colletotrichum spp. Plant Dis. 8311
Birbir, M. and Doǧu, N. Ç (2003). The Evaluation of Antifungal Effect of Calcium Propionate on Different Mold Species. *Biotechnology* & *Biotechnological Equipment* 171
Brock, M. and Buckel, W. (2004). On the mechanism of action of the antifungal agent propionate: Propionyl-CoA inhibits glucose metabolism in Aspergillus nidulans. European Journal of Biochemistry 27115
De Miccolis Angelini, Rita Milvia, Landi, L., Raguseo, C., Pollastro, S., Faretra, F., and Romanazzi, G. (2022). Tracking of Diversity and Evolution in the Brown Rot Fungi Monilinia fructicola, Monilinia fructigena, and Monilinia laxa. Frontiers in microbiology
Droby, S., Wisniewski, M., El Ghaouth, A., and Wilson, C. (2003). Influence of food additives on the control of postharvest rots of apple and peach and efficacy of the yeast-based biocontrol product Aspire. Postharvest Biol. Technol. 272
Emmett, R. W. and Parbery, D. G. (1975). Appressoria. Annu. Rev. Phytopathol. 131
Fernández-Ortuño, D., Grabke, A., Li, X., and Schnabel, G. (2015). Independent emergence of resistance to seven chemical classes of fungicides in Botrytis cinerea. Phytopathology 1054
Fishel, F. M. (2010). The EPA conventional reduced risk pesticide program. EDIS 20101
Frank, A. B. (1887). Ueber einige neue und weniger bekannte Pflanzenkrankheiten
Goswami, S. K., Singh, V., Chakdar, H., and Choudhary, P. (2018). Harmful effects of fungicides-Current status. Inter J Agric Environ Biotech1025-1033
Guan, W. and Fan, X. (2010). Combination of sodium chlorite and calcium propionate reduces enzymatic browning and microbial population of fresh-cut "Granny Smith" apples. J. Food Sci. 752
Guimaraes, J. E., de la Fuente, B., Pérez-Gago, M. B., Andradas, C., Carbó, R., Mattiuz, B., et al. (2019). Antifungal activity of GRAS salts against Lasiodiplodia theobromae in vitro and as ingredients of hydroxypropyl methylcellulose-lipid composite edible coatings to control Diplodia stem-end rot and maintain postharvest quality of citrus fruit. Int. J. Food Microbiol. 301
Guo, D. Q., Wang, W. H., Pu, Y. F., Xu, Q., Zhu, L. X., and Yang, B. Q. (2016). Influence of calcium propionate on the control of post-harvest rots of jujube and the biocontrol activity of an antagonistic yeast. The Journal of Horticultural Science and Biotechnology 915
Holst-Jensen, A., Kohn, L. M., Jakobsen, K. S., and Schumacher, T. (1997). Molecular phylogeny and evolution of Monilinia (Sclerotiniaceae) based on coding and noncoding rDNA sequences. Am. J. Bot. 845
Hu, M., Grabke, A., Dowling, M. E., Holstein, H. J., and Schnabel, G. (2015). Resistance in Colletotrichum siamense from peach and blueberry to thiophanate-methyl and azoxystrobin. Plant Dis. 996
Kortekamp, A. (2006). Effectiveness of calcium salts, hydrogen peroxide, azoxystrobin, and antagonistic bacteria to control post-harvest rot on tobacco caused by Rhizopus oryzae. Int. J. Pest Manage. 5202
Legan, J. D. (1993). Mould spoilage of bread: the problem and some solutions. Int. Biodeterior. Biodegrad. 321-3
Luo, C. and Schnabel, G. (2008). The cytochrome P450 lanosterol 14α-demethylase gene is a demethylation inhibitor fungicide resistance determinant in Monilinia fructicola field isolates from Georgia. Appl. Environ. Microbiol. 742
Mendgen, K., Hahn, M. G., and Deising, H. (1996). Morphogenesis and mechanisms of penetration by plant-pathogenic fungi. Annu. Rev. Phytopathol. 341
Muñoz, M., Faust, J. E., and Schnabel, G. (2019). Characterization of Botrytis cinerea from commercial cut flower roses. Plant Dis. 1037
Olivier, C., Halseth, D. E., Mizubuti, E. S., and Loria, R. (1998). Postharvest application of organic and inorganic salts for suppression of silver scurf on potato tubers. Plant Dis. 822
Olson, E. (2010). Soil fumigants-risk mitigation measures for reregistration. In: Riley, LE; Pinto, JR; Dumroese, RK, tech.cords.National Proceedings: Forest and Conservation Nursery Associations-2009.Proc.RMRS-P-62.Fort Collins, CO: US Department of Agriculture, Forest Service, Rocky Mountain Research Station.p. 79-83. 62
Pratibha, S., Swati, D., Bhati, D. S., Manika, S., and Chowdappa, P. (2014). Penetration and infection processes of Alternaria brassicicola on cauliflower leaf and Alternaria brassicae on mustard leaf: a histopathological study. Plant Pathology Journal (Faisalabad) 132
Rani, L., Thapa, K., Kanojia, N., Sharma, N., Singh, S., Grewal, A. S., et al. (2021). An extensive review on the consequences of chemical pesticides on human health and environment. J. Clean. Prod. 283
Ranjbar, A., Ramezanian, A., Shekarforoush, S., Niakousari, M., and Eshghi, S. (2022). Antifungal activity of thymol against the main fungi causing pomegranate fruit rot by suppressing the activity of cell wall degrading enzymes. LWT 161
Rodriguez-Galvez, E. and Mendgen, K. (1995). The infection process ofFusarium oxysporum in cotton root tips. Protoplasma 1891
Sun, C., Zhu, C., Tang, Y., Ren, D., Cai, Y., Zhou, G., et al. (2021). Inhibition of Botrytis cinerea and control of gray mold on table grapes by calcium propionate. Food Quality and Safety 5
Talbot, N. J. (2003). On the trail of a cereal killer: exploring the biology of Magnaporthe grisea. Annual Reviews in Microbiology 571
U.S. Food and Drug Administration (2020). CFR - Code of Federal Regulations Title 21 U.S. Food and Drug Administration, Silver Spring, MD, USA
US Environmental Protection Agency (US EPA) (2005). Reregistration Eligibility Decision for Mancozeb. Reregistration Eligibility Decision for Mancozeb
Yang, J. H., Brannen, P. M., and Schnabel, G. (2015). Resistance in Alternaria alternata to SDHI fungicides causes rare disease outbreak in peach orchards. Plant Dis. 991
Yun, J. and Lee, D. G. (2016). A novel fungal killing mechanism of propionic acid. FEMS yeast research 167
Zaker, M. (2014). Antifungal evaluation of some inorganic salts against three phytopathogenic fungi. International Journal of Agriculture and crop sciences 714
Zubrod, J. P., Bundschuh, M., Arts, G., Brühl, C. A., Imfeld, G., Knäbel, A., et al. (2019). Fungicides: an overlooked pesticide class? Environ. Sci. Technol. 537

## Claims

1. A method of inhibiting growth of a microbe on a cut flower comprising contacting at least a portion of the cut flower with an effective amount of a composition comprising a carboxylic acid of formula (I) or salt thereof: 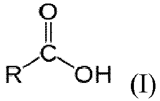 wherein R is H, Ph, Ar, or a C₁-C₆₀ alkyl.

2. The method of claim 1, wherein R is a C₁-C₁₀ alkyl.

3. The method of claim 1 or claim 2, wherein the carboxylic acid is propionic acid.

4. The method of any one of claims 1 to 3, wherein the carboxylic acid of formula (I) or salt thereof is calcium propionate.

5. The method of any one of claims 1 to 4, wherein the cut flower is a rose or petunia

6. The method of any one of claims 1 to 5, wherein the composition further comprises water.

7. The method of claim 6, wherein the carboxylic acid has a concentration of from 0.01% to 0.50% (w/v).

8. The method of claim 6, wherein the carboxylic acid has a concentration of about 0.1% (w/v).

9. The method of any of claims 6 to 8, wherein the composition has an acidic pH.

10. The method of any of claims 6 to 8, wherein the composition has a pH from 5.5 to 6.5.

11. The method of any one of claims 1 to 10, wherein the composition is contacted by submerging the cut flower, or a portion thereof, into the composition.

12. The method of any one of claims 1 to 10, wherein the composition is contacted by spraying.

13. The method of any one of claims 1 to 12, where the microbe is selected from the group consisting of *Alternaria alternata, Botrytis cinerea, Colletotrichum siamense, Monilinia fructicola,* and any combination thereof.

14. The method of any one of claims 1 to 13, wherein the cut flower is a rose and the method comprises contacting at least a portion of the cut rose with an effective amount of a composition comprising:
calcium propionate and water, wherein the composition comprises calcium propionate in a concentration of from 0.01% to 0.50% (w/v).

15. The method of claim 14, wherein the composition comprises calcium propionate in a concentration of about 0.10% (w/v).
